# EUROPEAN PATENT SPECIFICATION

(11) **EP 4 616 441 B1**
(45) Date of publication and mention of the grant of the patent: **22.07.2026**
(21) Application number: 23805533.9
(22) Date of filing: 09.11.2023
(51) Int. Cl.: H01H 3/30

(54) **OPERATING MECHANISM FOR A SWITCHGEAR DEVICE, AND SWITCHGEAR DEVICE**
BETÄTIGUNGSVORRICHTUNG FÜR EINE SCHALTANLAGE UND SCHALTANLAGE
MÉCANISME DE COMMANDE POUR DISPOSITIF DE COMMUTATION, ET DISPOSITIF DE COMMUTATION

(30) Priority: 09.11.2022 CN 202222978332 U
(43) Date of publication of application: 17.09.2025
(73) Proprietor: Hitachi Energy Ltd, 8050 Zürich (CH)
(72) Inventor: CHEN, TianSong, Xiamen, Fujian 361011 (CN); LU, ChangXian, Xiamen, Fujian 361021 (CN); WANG, WenYong, Xiamen, Fujian 361015 (CN); MA, Jun, Xiamen, Fujian 361101 (CN); NONG, JieShen, Xiamen, Fujian 361021 (CN); CHEN, DaJin, Xiamen, Fujian 361006 (CN); ZHAO, YanDong, Shenyang, Liaoning 100032 (CN); YING, Feng, Xiamen Fujian 361199 (CN); ERFORD, Tobias, 8050 Zürich (CH); HINDER, Andrin, 5113 Holderbank AG (CH); SAXL, David, 8046 Zürich (CH); ZUEND, Christian, 8304 Wallisellen (CH)
(74) Representative: Michalski Hüttermann & Partner mbB
(86) International application number: PCT/EP2023/081349
(87) International publication number: WO 2024/100215

(56) References cited:
- CN-A- 113 345 755
- CN-A- 113 539 730
- CN-B- 106 887 355

## Description

### Technical Field

The invention relates to an operating mechanism for a switchgear device, comprising a rotatable output shaft configured for achieving an opening or closing operation of the switchgear device by rotation and a rotatable energy storage lever and a spring, whereby the energy storage lever is configured for being rotated by a motor so as to drive the spring to be compressed for storing energy.

### Background Art

An electric-spring operating mechanism is one of key components of a switchgear device and is used to store energy provided by a power module into a spring and to release the energy during an opening or closing process of the switchgear so as to drive a moving contact to quickly execute the opening or closing operation.

CN 106 887 355 B describes a switch device with a closing device, wherein the switch device is a transmission device for a solid insulated switchgear device.

CN 113 345 755 A describes an isolating switch operating mechanism.

However, existing electric-spring operating mechanism cannot actually achieve a fast opening or closing operation due to its structural incapacity, i.e. during the opening or closing process and before the spring passes through its dead-point position to release energy, the spring is driven to be compressed to store energy by a motor, and at the same time the moving contact is driven to move slowly by an output shaft or the existing electric-spring operating mechanism has high cost for its components and low reliability due to its complex structure.

### Summary of invention

It is therefore an object of the invention to provide a simple, labour-saving, and reliable electric-spring operating mechanism that can achieve an expected movement mode of a moving contact of a switchgear device, such as "fast-closing and fast-opening", "fast-closing and slow-opening", and "fast-opening and slow-closing" operations.

The object of the invention is solved by the features of the independent claims. Preferred implementations are detailed in the dependent claims.

Thus, the object is solved by an operating mechanism for a switchgear device, comprising
a rotatable output shaft configured for achieving an opening or closing operation of the switchgear device by rotation,
a rotatable energy storage lever and a spring, whereby the energy storage lever is configured for being rotated by a motor so as to drive the spring to be compressed for storing energy, and
an optionally rotatable drive lever torque-proof connected to the output shaft, rotatably connected to the energy storage lever and free-wheeling connected to the spring allowing a rotability between the drive lever and the spring of ≤ 120° for achieving the opening or closing operation of the switchgear device, whereby
the spring is configured, during at least one of the opening and closing operation of the switchgear device, for releasing energy so as to rotate preferably the output shaft directly or via the drive lever after passing through the springs' dead-point position.

A key point of the proposed solution lies in an implementation of a free-wheeling into the operating mechanism so that the same spring respectively spring-charging system can be used for the open and close operation of the switchgear device. Thereby, kinematic of the operating mechanism and of the switchgear device can be kept within a compact scale. The free-wheeling enables a decoupling respectively geometrically driven coupling of a linkage towards a moving contact of the switchgear device and the spring which is providing energy for the operations. In dependency of a chosen geometry of said linked/connected components a motion characteristic of the operating mechanism respectively of the switchgear device can advantageously be defined as needed.

Such wise an operating mechanism allows fast closing and fast opening operations by means of a spring-loaded lever, namely by means of the rotatable drive lever. Thereby, slow movement for spring charging can be established by a spindle drive whereas the fast operation preferably needs a low friction moving ability to being able to accelerate contacts of the switching device. Generally, the proposed free-wheeling principle can either be integrated into the operating mechanism or into the linkage towards moving contacts of the switching device. Also, a bearing of the operating mechanism and the linkage towards the moving contact can be designed fully independent respectively partly dependent. By passing through the springs' dead-point position the spring energy quickly releases and such wise quickly opens, or closes, the switchgear device.

Preferably, the output shaft, the energy storage lever and the drive lever share one common axis, namely the output shaft, also referred to as output hub or main hub. Preferably, the rotability between the drive lever and the spring is ≤ 90°, ≤ 60° or ≤ 30° and/or ≥ 10°, ≥ 20° or > 30°. Preferably, the output shaft is rotatably and/or mechanically connected to the switchgear device for connecting and/or disconnecting at least one moving contact from another contact of the switching device.

According to a preferred implementation, the drive lever is torque-proof connected to the energy storage lever or the drive lever is free-wheeling connected to the energy storage lever allowing a rotability between the drive lever and the energy storage lever of ≤ 120°. Preferably, the rotability between the drive lever and the energy storage lever is ≤ 90°, ≤ 60° or ≤ 30° and/or ≥ 10°, ≥ 20° or > 30°. The drive lever is preferably connected torque-proof by axially extending pins to the energy storage lever.

In a further preferred implementation, the energy storage lever is pivotally connected to the spring by a connecting pin and the drive lever is configured for being rotated by the connecting pin. The connecting pin is preferably attached to the spring, more preferably to one end of the spring and/or extends in axial direction. The term axial direction preferably refers to the output shaft. The connecting pin preferably slides free-wheeling within an opening of the drive lever.

According to another preferred implementation, the drive lever comprises an arc-shaped drive lever slot extending over ≤ 120° and whereby the drive lever slot is preferably provided as arc-shaped elongated hole. The drive lever slot preferably extends over ≤ 90° or ≤ 60° and/or ≥ 10°, ≥ 20° or > 30°. In a further preferred implementation, the connecting pin slides free-wheeling within the drive lever slot.

According to another preferred implementation, the output shaft and the drive lever are provided one-piece. Such way only one lever is required, while the free-wheel function can be realized with only one levers and the output shaft. In case of two lever as described before, preferably a distance ring is provided between the two levers.

In a further preferred implementation, the energy storage lever comprises a least one, preferably three, arc-shaped energy storage lever slot extending over ≤ 120°, preferably ≤ 90° and more preferably 60°, and/or ≥ 10°, ≥ 20° or > 30°, and whereby the energy storage lever slot is preferably provided as arc-shaped elongated hole. According to another preferred implementation, the drive lever and/or the output shaft comprises a pin free-wheeling sliding within the energy storage lever slot. Preferably the pin extends in axial direction for such wise guiding and limiting the free-wheeling.

In a further preferred implementation, the energy storage lever comprises a Y-shape preferably having two distant pushing arms arranged ≤ 120°, ≤ 90° or ≤ 60° and/or ≥ 10°, ≥ 20° or > 30° distant to each other. Preferably, the energy storage lever comprises a hole for respectively corresponding to the connecting pin. The hole is preferably arranged opposite to the two pushing arms. The drive lever preferably comprises a V-like shape having two arms with the drive lever slot arranged between the arms.

According to another preferred implementation, the operating mechanism comprises two drive levers and/or two energy storage levers arranged on both sides of the spring. In this respect both sides of the spring means preferably that one end of the spring is arranged between the two drive levers and/or the two energy storage levers. Preferably, the spring comprises two connecting pins arranged at the one end and extending opposite to each other in axial direction away from the one end. When providing two drive levers and/or two energy storage levers the operation mechanism becomes very robust.

In a further preferred implementation, the operating mechanism comprises a motor, a screw rod connected to the motor and configured for being rotated by the motor and a nut sleeved on the screw rod and configured to move linearly along the screw rod when the screw rod rotates, wherein the nut is provided with a protrusion configured to push the energy storage lever.

According to another preferred implementation, the operating mechanism comprises an absorber and a damping arm fixedly connected to one end of the output shaft for contacting the absorber during an end stage of the opening or closing operation of the switchgear device.

The object is further solved by a switchgear device, comprising a moving contact and the operating mechanism for a switchgear device as described before and configured to drive the moving contact to achieve the opening or closing operation. The switchgear device may comprise two contacts, of which one contact is movable in relation to the other contact, and arranged beneath the moveable contact. Said movable contact can be movable between a closed position, in which the contacts are electrically connected, and an open position, in which the contacts are unconnected. The movable contact can be provided as tulip contact and the other contact for example fixed contact can be provided as plug contact, or otherwise vice versa. Also, both contacts can be arranged movable in respect to each other.

According to another preferred implementation, the switchgear device is provided as an earthing switch, a disconnector, an isolating and earthing switch, and a fast-acting earthing switch of a gas insulated switchgear. The earthing switch respectively fast earthing switch for interrupting non-short-circuit currents is preferably provided as a device designed for interrupting non short-circuit currents only, in particular as a disconnector, more particularly as a high voltage disconnector, or an earthing switch, more particularly as a make-proof earthing switch, or as a medium voltage or high voltage gas-insulated switchgear, GIS, comprising such a device. The term "short-circuit currents", as opposed to non-short circuit currents, can be understood as currents that are established in a first, transient phase of up to approximately 3 seconds after a point in time, when from a grid operated under high voltage parts under high voltage get connected to ground. According to such definition, the term "non short-circuit currents" preferably relates to any currents not falling under the definition of "short-circuit currents" given above.

Generally, a disconnector or earthing switch, also known a grounding switch, is often understood as a protective device included in switchgear components like circuit breakers and isolators. When circuit breakers are removed and racked out, earthing switches automatically ground a part of a bus bar adjacent to the circuit breakers. For isolators, the earthing switches make contact with the bus bar when the isolator isolates the circuits, discharging any charges that may have gathered there.

For example, an earthing switch in switchgear is used to ground a remaining change in a power line after the power line has been removed from its source. A residual charge of-ten remains in a circuit after it has been severed or opened by the circuit breaker and isolator. An earthing switch is usually provided to discharge the charge. Such disconnector or earthing switches are usually designed to withstand short circuits. The disconnector or earthing switch in a substation often has an ability to create short circuits in order to safeguard other electrical devices from damage. The disconnector or earthing switch is often used with several high-voltage switchgear and also serves as a protective device in an overhaul of high-voltage electrical equipment.

According to a further implementation an operating mechanism for a switchgear device is provided, which comprises a base support and a power module, an energy storage module and a drive module mounted to the base support. The energy storage module comprises an energy storage lever and a spring, wherein the energy storage lever is pivotally connected to the spring by means of a connecting pin and adapted to be driven to rotate by the power module, so as to drive the spring to rotate and be compressed to store energy. The drive module comprises a drive lever and an output shaft, wherein the drive lever is sleeved on the output shaft and non-rotatable relative to the output shaft, and adapted to be driven to rotate by the connecting pin, so as to drive the output shaft to rotate to achieve an opening or closing operation of the switchgear device. The operating mechanism is configured, during at least one of the opening and closing operations of the switchgear device, to allow the spring to release energy and to drive the drive lever to rotate by means of the connecting pin only after that the spring rotates until it passes through its dead-point position.

In another preferred implementation, the operating mechanism is configured, during each of the opening and closing operations of the switchgear device, to allow the spring to release energy and to drive the drive lever to rotate by means of the connecting pin only after that the spring rotates until it passes through its dead-point position.

According to an alternative implementation, the energy storage lever is configured to present a Y-shape, and/or the drive lever is configured to present a V-shape.

In another preferred implementation, the drive lever is sleeved on the output shaft by means of a spline.

According to an alternative implementation, the energy storage lever is sleeved on the output shaft and rotatable relative to the output shaft by means of a bearing.

In another preferred implementation, the energy storage module comprises two energy storage levers arranged on both sides of the drive lever.

According to an alternative implementation, the drive module comprises a motor; a screw rod connected to the motor to be adapted to be driven to rotate by the motor; and a nut sleeved on the screw rod and adapted to move linearly along the screw rod when the screw rod rotates, wherein the nut is provided with a protrusion adapted to push the energy storage lever.

In another preferred implementation, the operating mechanism further comprises a damping module comprising an absorber mounted to the base support; and a damping arm fixedly connected to one end of the output shaft to contact the absorber during an end stage of the opening or closing operation of the switchgear device.

Compared with the prior art, the proposed operating mechanism for a switchgear device according to the present disclosure has various beneficial effects, in particular: by providing the energy storage lever and the drive lever that are independent of each other, the energy storage operation and at least one of the opening and closing operations do not affect each other, and before the spring passes through its dead-point position, the moving contact of the switchgear device does not have a slow-operation stage in which the moving contact is driven by the power module, thereby allowing the operating mechanism to have a better acceleration performance; in addition, the shape and overall structure of the parts of the operating mechanism are simple and reliable with low cost, which is conducive to modular design and can be widely used in various types of switchgear devices.

### Brief description of drawings

These and other aspects of the invention will be apparent from and elucidated with reference to the implementations described hereinafter.

In the drawings:
- Fig. 1: is a schematic view showing a partial structure of an operating mechanism according to a preferred implementation;
- Fig. 2: is a schematic view showing a partial structure of the operating mechanism of Fig. 1, viewed from another perspective;
- Fig. 3: is a schematic view showing a partial structure of the operating mechanism of Fig. 1, viewed from yet another perspective;
- Figs. 4A to 4E: are schematic views showing an operation process of the operating mechanism according to a preferred implementation;
- Fig. 5: is a schematic view showing a partial structure of the operating mechanism according to another preferred implementation;
- Fig. 6: is a schematic view showing parts of the operating mechanism of Fig. 5, viewed from another perspective;
- Fig. 7: is a schematic view showing a partial structure of the operating mechanism according to yet another preferred implementation;
- Fig. 8: is a schematic view showing parts of the operating mechanism of Fig. 6, viewed from another perspective; and
- Fig. 9: is a schematic view showing a partial structure of the operating mechanism according to yet another preferred implementation.

### Description of implementations

The implementation and usage of the proposed solution is discussed in detail below. However, it is conceivable that the specific implementations discussed herein are merely intended to illustrate specific ways of implementing and using the proposed solution, and are not intended to limit the protection scope of the proposed solution.

When describing the structures and positions of the components, the directional expressions, such as "top", "bottom", "upper", "lower", "clockwise", and "counterclockwise", are not absolute, but relative. When the components are arranged as shown in the drawings, these directional expressions are appropriate, but when the positions of these components in the drawings are altered, these directional expressions should be altered accordingly.

In addition, the terms, such as "mounted to" and "connected to", should be understood in a broad sense unless otherwise specified and defined. For example, "connected to" may be "fixedly connected to", "detachably connected to" or "integrally connected to", may be "mechanically connected to" or "electrically connected to", and may be "directly connected to", "indirectly connected to" or "associated with (something) under some effect". For those skilled in the art, the specific meanings of the above terms can be understood according to specific circumstances.

It is conceivable that the switchgear device 601 to which the electric-spring operating mechanism is applied comprises but is not limited to an earthing switch, a disconnector, an isolating and earthing switch, and a fast-acting earthing switch of a gas insulated switchgear, GIS.

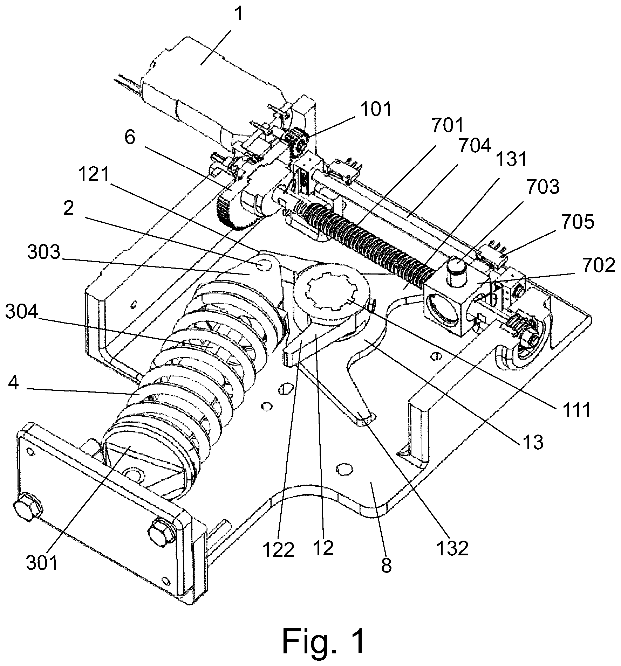

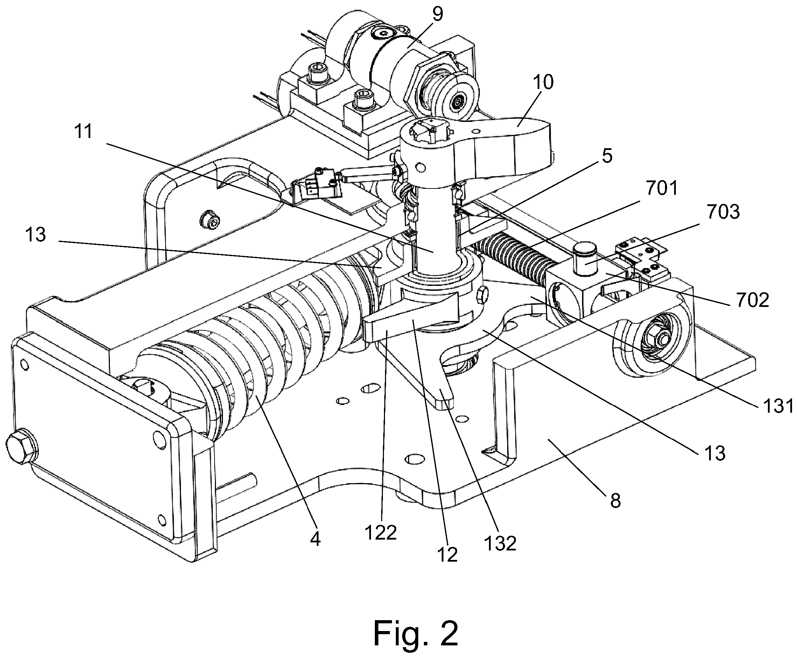

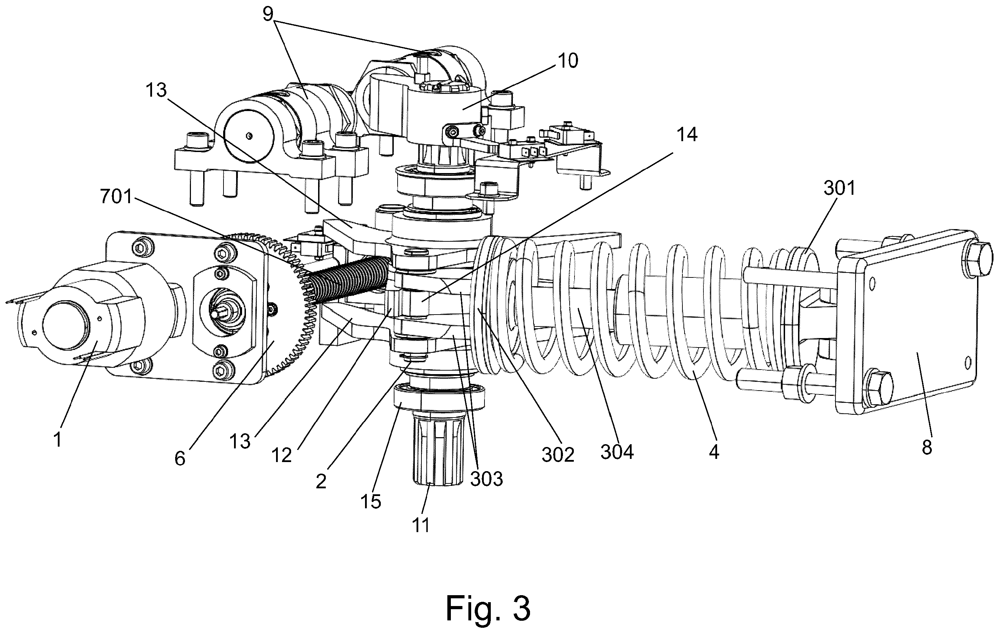

The specific structure of the operating mechanism according to a preferred implementation is described below with reference to Figs. 1 to 3. As shown in FIGS. 1 to 3, the operating mechanism mainly comprises a base support 8, and a power module, an energy storage module and a drive module, each of which is mounted to the base support 8.

The power module mainly comprises a motor 1 and a screw rod-nut transmission device connected to the motor 1. More specifically, the motor 1 used for providing power is fixedly mounted to the base support 8, and is configured to transmit power to the screw rod-nut transmission device by means of a first transmission gear 101 fixedly sleeved on an output shaft of the motor 1 and a second transmission gear 6 engaged with the first transmission gear 101.

The screw rod-nut transmission device comprises components such as a screw rod 701, a nut 702, a protrusion 703, a limiting rod 704, and a microswitch 705. Two ends of the screw rod 701 are rotatably mounted to the base support 8 by means of, for example, bearings. The second transmission gear 6 is sleeved on and non-rotatable relative to the screw rod 701 to drive the screw rod 701 to rotate under the drive of the motor 1. It is conceivable that the type of the screw rod 701 comprises but is not limited to a ball screw rod or a trapezoidal screw rod. The nut 702 is sleeved on the screw rod 701 and capable of moving linearly along the screw rod 701 when the screw rod 701 rotates.

Further, each of the top and bottom surfaces of the nut 702 is provided with the protrusion 703, for example a protruding pin integrally formed on the nut 702, used for pushing an energy storage lever 13, see the following description. The limiting rod 704 is mounted to the base support 8 and is parallel to the screw rod 701, so as to limit the position of the nut 702 when the nut 702 moves along the screw rod 701, thereby avoiding rotation of the nut 702. The microswitches 705 are mounted to the limiting rod 704 and are adjacent to two ends of the screw rod 701, so as to send a control signal, such as a stopping signal, to the motor 1 when the nut 702 moves to come into contact with the microswitches 705.

The energy storage module comprises two energy storage levers 13 and an energy storage spring 4 mounted to a spring support. More specifically, each energy storage lever 13 is sleeved on and rotatable relative to an output shaft 11 (see the following description) by means of, for example, a first bearing/shaft sleeve 5, and is configured to present an approximately Y-shape. That is to say, the energy storage lever 13 comprises a first pushing arm 131 and a second pushing arm 132 that are arranged symmetrically with respect to each other in an approximately V-shape and capable of being pushed to rotate by the protrusion 703 of the nut 702, and the end of the energy storage lever 13 opposite to the two pushing arms is provided with an opening for a connecting pin 2 to pass through.

The spring support comprises a first spring support 301 mounted to the base support 8 and a second spring support 302 that is opposite to the first spring support 301 and capable of moving towards or away from the first spring support 301. The spring 4 is spirally arranged on a guide rod 304 between the first spring support 301 and the second spring support 302 to be compressed between the first spring support 301 and the second spring support 302 to store energy. The second spring support 302 is integrally provided with two connecting plates 303 that protruding in a direction away from the first spring support 301. Each connecting plate 303 is provided with an opening for the connecting pin 2 to pass through, such that the two energy storage levers 13 are pivotally connected to the spring 4 by means of the connecting pin 2.

In the illustrated implementation, the two connecting plates 303 are arranged between the two energy storage levers 13, and a shaft sleeve 14 arranged between the two connecting plates 303 is sleeved on the connecting pin 2, that is, the connecting pin 2 passes through the lower energy storage lever 13, the lower connecting plate 303, the shaft sleeve 14, the upper connecting plate 303, and the upper energy storage lever 13 from bottom to top in sequence. Thus, when the energy storage lever 13 is pushed by the nut 702 to rotate under the drive of the power module, it can drive the spring support and the spring 4 to rotate by means of the connecting pin 2, such that the spring 4 is compressed to store energy.

The drive module comprises a drive lever 12 and the output shaft 11. More specifically, two ends of the output shaft 11 are rotatably mounted to the base support 8 by means of, for example, second bearings 15, and the output shaft 11 is connected to a moving contact 602 of the switchgear device 601, such that the rotation of the output shaft 11 drives the moving contact 602 to move so as to achieve the opening and closing operations of the switchgear device 601. The drive lever 12 is sleeved on and non-rotatable relative to the output shaft 11 by means of, for example, a spline 111, such as an external spline formed on the output shaft 11 and an internal spline formed on the drive lever 12, to drive the output shaft 11 to rotate, and is configured to present an approximately V-shape.

That is to say, the drive lever 12 comprises a third pushing arm 121 and a fourth pushing arm 122 that are arranged symmetrically with respect to each other in an approximately V-shape and capable of being pushed to rotate by the connecting pin 2, specifically by the shaft sleeve 14 arranged on the connecting pin 2. In the illustrated implementation, the two energy storage levers 13 sleeved on the output shaft 11 are arranged on two sides of the drive lever 12 respectively. That is, the output shaft 11 passes through the lower energy storage lever 13, the drive lever 12, and the upper energy storage lever 13 from bottom to top in sequence.

The damping module comprises two absorbers 9 mounted to the base support 8 and a damping arm 10 fixedly connected to one end of the output shaft 11. The damping arm 10 contacts the corresponding absorber 9 during an end stage of the opening or closing operation of the switchgear device 601, so as to reduce the movement speed of the moving contact 602 in the end stage and achieve the limitation of its position.

By coordinating the parameters such as the angle between the two pushing arms of the energy storage lever 13, the angle between the two pushing arms of the drive lever 12, and the positions of the screw rod-nut transmission device and the output shaft 11, etc., the spring 4 is allowed, during at least one of the opening and closing operations of the switchgear device 601, to release energy and to drive the drive lever 12 to rotate by means of the connecting pin 2 only after that the spring 4 rotates until it passes through its dead-point position, so as to achieve the operations, such as "fast-closing and fast-opening", "fast-closing and slow-opening", and "fast-opening and slow-closing" operations of the switchgear device 601.

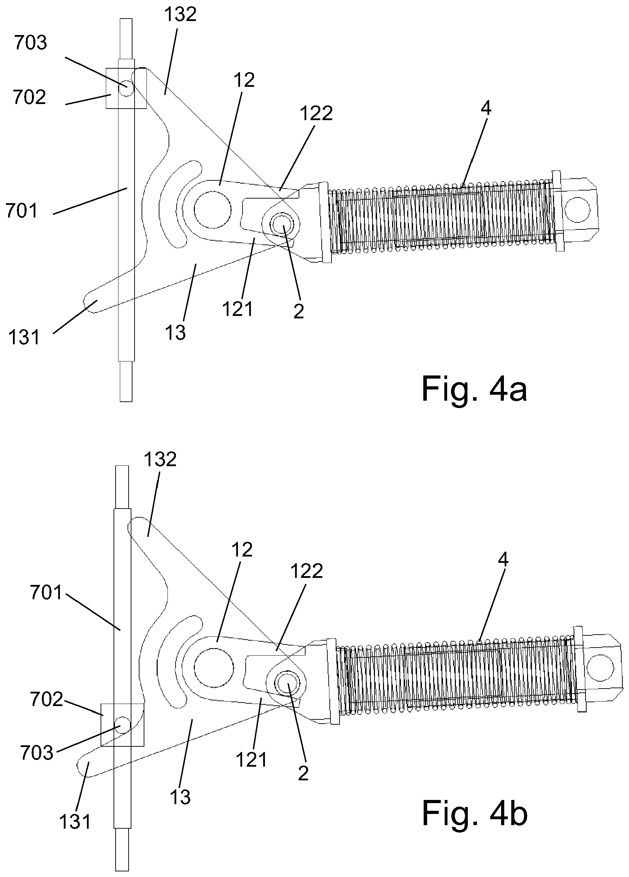

An operation process of the operating mechanism can achieve a "fast-closing and slow-opening" operation of the switchgear device 601 is described below with reference to Figs. 4A to 4E.

The initial position of the operating mechanism is the "opened" position, see Fig. 4A, where the nut 702 is located at one end of the screw rod 701. After the "closing" operation begins, the motor 1 drives the screw rod 701 to rotate by means of the second transmission gear 6, such that the nut 702 starts to move linearly along the screw rod 701 until the protrusion 703 of the nut 702 comes into contact with the first pushing arm 131 of the energy storage lever 13, see Fig. 4B.

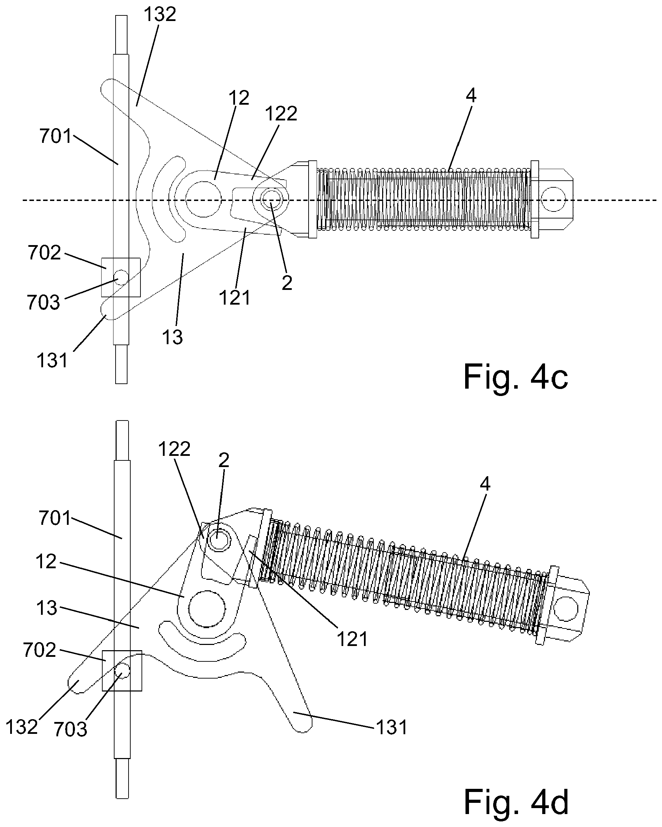

Then, the nut 702 continues to move linearly along the screw rod 701 and pushes the first pushing arm 131 by means of the protrusion 703 to drive the energy storage lever 13 to start to rotate counterclockwise. Since the energy storage lever 13 is pivotally connected to the spring 4 by means of the connecting pin 2, the rotation of the energy storage lever 13 can drive the spring 4 to rotate clockwise and be compressed to store energy, until the spring 4 reaches its dead-point position, see Fig. 4C, to finish the energy storage.

The "dead-point" position here refers to a position, see the dashed line in Fig. 4C, where the central axis of the spring 4 coincides with the central axis of the energy storage lever 13, i.e. the central line of the angle between the first pushing arm 131 and the second pushing arm 132, which is also the symmetrical axis of the energy storage lever 13. At this point, the spring 4 can remain stationary if the spring 4 is not subjected to a force perpendicular to its central axis, for example, the protrusion 703 of the nut 702 no longer pushes the energy storage lever 13.

Especially as shown in Figs. 4A to 4C, during the energy storage process of the spring 4, the connecting pin 2 moves from the position, where the connecting pin 2 is in contact with the third pushing arm 121 of the drive lever 12, to the position, where the connecting pin 2 is in contact with the fourth pushing arm 122 of the drive lever 12. However, the drive lever 12 remains stationary during the energy storage process of the spring 4, such that the output shaft 11 and the moving contact 602 of the switchgear device 601 remain stationary during the energy storage process of the spring 4.

Then, the nut 702 continues to move linearly along the screw rod 701, such that the spring 4 quickly releases energy after passing through its dead-point position, thereby allowing the connecting pin 2 to push the drive lever 12, by means of the shaft sleeve 14, to quickly rotate counterclockwise until it reaches the "closed" position, see Fig. 4D. The rotation of the drive lever 12 can drive the output shaft 11 to rotate quickly, thereby driving the moving contact 602 of the switchgear device 601 to complete the fast "closing" operation.

During the end stage of the operation, the damping arm 10 connected to the output shaft 11 comes into contact with the corresponding absorber 9 to reduce the movement speed of the moving contact. During the "closing" operation, before the spring 4 passes through the dead-point position, the moving contact 602 of the switchgear device 601 does not have a slow-operation stage in which the moving contact 602 is driven by the motor 1, thereby allowing the operating mechanism to have a better acceleration performance.

During the "opening" operation that is reverse to the "closing" operation mentioned above, the motor 1 drives the screw rod 701 to rotate reversely by means of the second transmission gear 6, such that the nut 702 starts to move linearly along the screw rod 701 in a reverse direction, and pushes the second pushing arm 132 of the energy storage lever 13 by means of the protrusion 703, allowing the energy storage lever 13 to start to rotate clockwise.

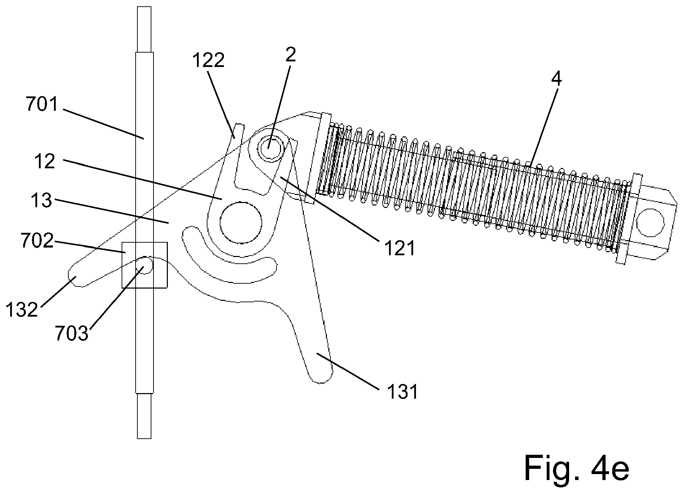

The rotation of the energy storage lever 13 can drive the spring 4 to rotate counterclockwise and be compressed to store energy. Due to the specific arrangement of the angle between the third pushing arm 121 and the fourth pushing arm 122 of the drive lever 12, the spring 4 does not reach its dead-point position when the connecting pin 2 moves from the position, see Fig. 4D, where the connecting pin 2 is in contact with the fourth pushing arm 122 of the drive lever 12, to the position, see Fig. 4E, where the connecting pin 2 is in contact with the third pushing arm 121 of the drive lever 12.

Then, the nut 702 continues to move linearly along the screw rod 701 and pushes the energy storage lever 13 to continue to rotate clockwise, so as to drive the spring 4 to continue to be compressed to store energy. At the same time, the connecting pin 2 pushes the drive lever 12, by means of the shaft sleeve 14, to start to slowly rotate clockwise. The rotation of the drive lever 12 can drive the output shaft 11 to rotate slowly, thereby driving the moving contact 602 of the switchgear device 601 to start a slow "opening" operation. The slow "opening" operation continues until the spring 4 passes through its dead-point position and then quickly releases energy, thereby driving the moving contact 602 to complete the entire "opening" operation.

Similarly, during the end stage of the operation, the damping arm 10 connected to the output shaft 11 comes into contact with the corresponding absorber 9 to reduce the movement speed of the moving contact. Thus, the operating mechanism actually achieves the "fast-closing and slow-opening" operation of the switchgear device 601.

It can be understood that a "fast-opening and slow-closing" operation of the switchgear device 601 can also be achieved by means of an operating mechanism with a similar structure. It can also be understood that, due to the modular design of the operating mechanism, it can be configured, by only changing the dimensions and positions of some components, such as increasing the angle between the third pushing arm 121 and the fourth pushing arm 122 of the drive lever 12, and/or changing the relative position between at least some of the components such as the screw rod 701, the nut 702, the energy storage lever 13, the connecting pin 2, the spring 4, the drive lever 12, and the output shaft 11, to allow the spring 4 to quickly release energy and to drive the drive lever 12 to rotate by means of the connecting pin 2 only after that the spring 4 rotates until it passes through its dead-point position, during each of the "opening" and "closing" operations of the switchgear device 601, thereby achieving a "fast-closing and fast-opening" operation of the switchgear device 601.

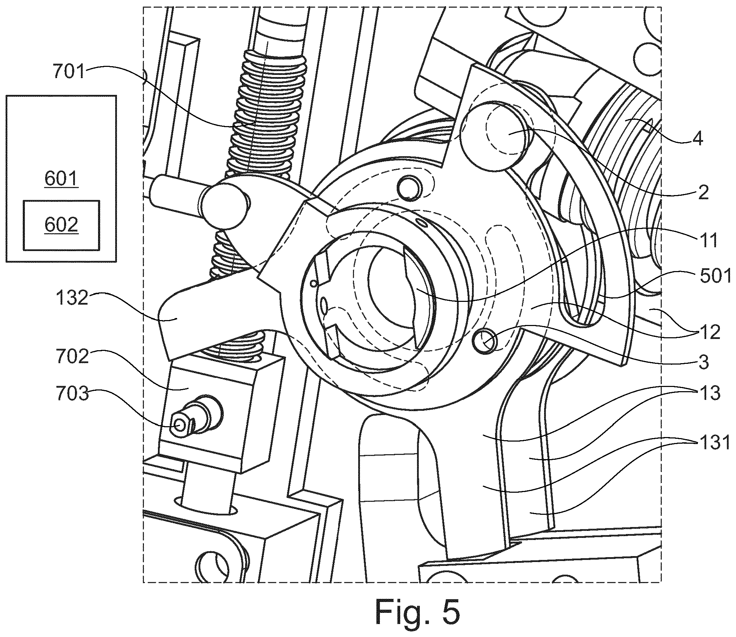

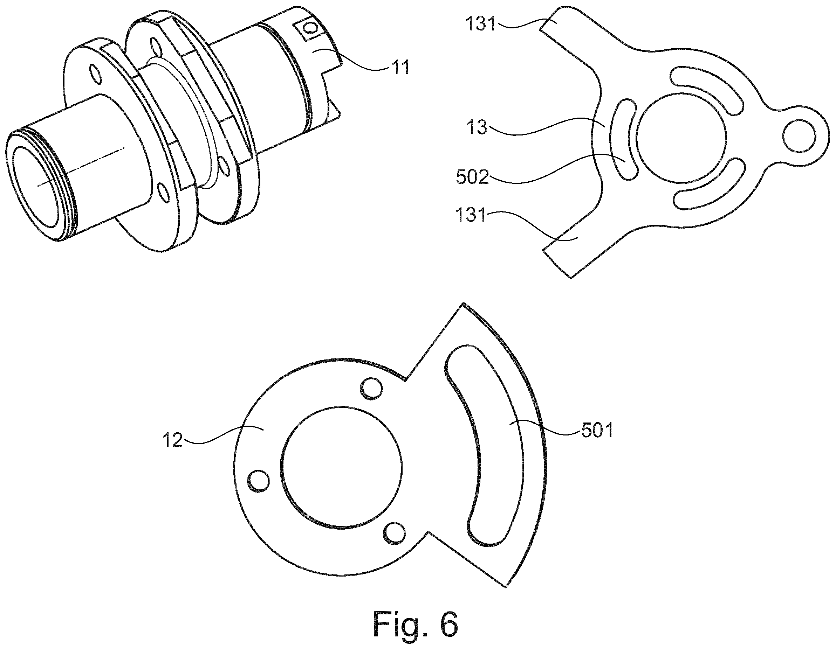

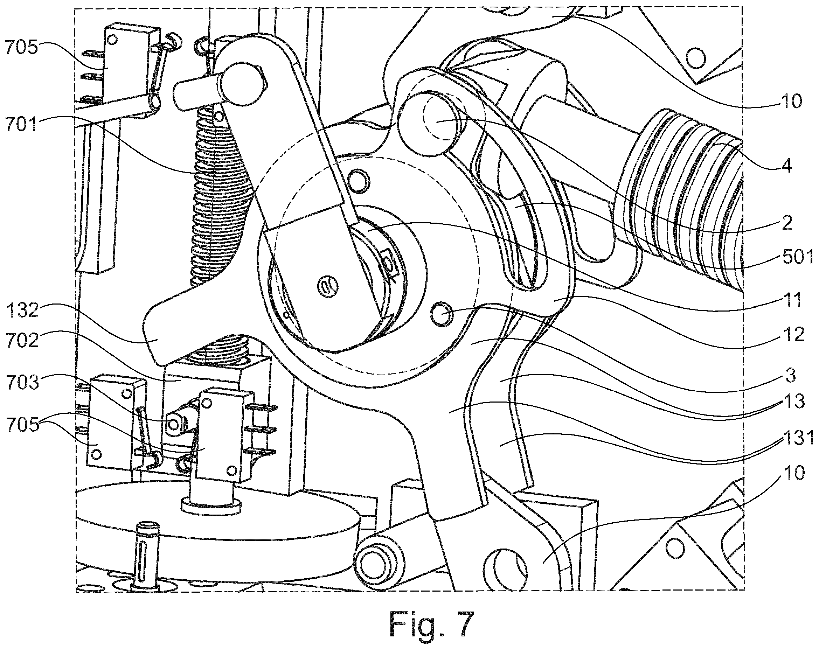

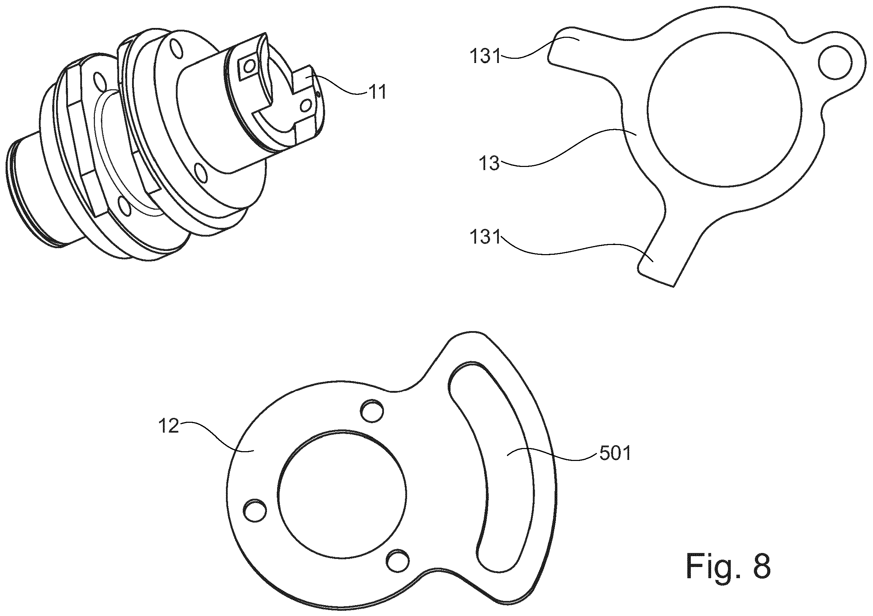

Figs. 5, 7 and 9 are schematic views showing each a partial structure of the operating mechanism according to another preferred implementations, whereby Figs. 6 and 8 are schematic views showing parts of the operating mechanism of Figs. 5 and 7. As in the before described implementations, the operating mechanism for the switchgear device 601, only very schematically shown in Fig. 5 with its moving contact 602, comprises the rotatable output shaft 11, also referred to as output to hub or main hub, which is configured for achieving the opening or closing operation of the switchgear device 601 by rotation.

The operating mechanism further comprises the rotatable energy storage lever 13, also referred to as spring charging lever, and the spring 4. The Y-shaped energy storage lever 13 is configured for being rotated by the motor 1 as described before i.e. via the screw rod 701 moving the nut 702 linearly along the screw rod 701, such that the first pushing arm 131 respectively the second pushing arm 132 of the energy storage lever 13 is actuated by the protrusion 703. More precisely, the screw rod 701 is connected to the motor 1 and configured for being rotated by the motor 1, whereby the nut 702 is sleeved on the screw rod 701 and such wise configured to move linearly along the screw rod 701 when the screw rod 701 rotates. The nut 702 is provided with the protrusion 703, which pushes the energy storage lever 13. Such wise the spring 4 is driven respectively compressed for storing energy.

The operating mechanism even further comprises the rotatable drive lever 12, which is torque-proof connected to the output shaft 11. The drive lever 12 is rotatably connected to the energy storage lever 13, either torque-proof as shown in Fig. 7 respectively with the drive lever 12 as shown in Fig. 8, or free-wheeling connected to the energy storage lever 13 thus allowing a rotability between the drive lever 12 and the energy storage lever 13 of ≤ 60°, as shown in Fig. 5 respectively with the drive lever 12 as shown in Fig. 6.

As can be seen from Fig. 6, for allowing the free-wheeling rotability, the energy storage lever 13 comprises three arc-shaped energy storage lever slots 502 each extending over 60° and each provided as arc-shaped elongated hole. The drive lever 12 comprises three axially extending pins 3, which slide within the energy storage lever slots 502 for such wise allowing the free-wheeling rotability.

The drive lever 12 is further free-wheeling connected to the spring 4 thereby allowing a rotability between the drive lever 12 and the spring 4 of ≤ 60° for achieving the opening or closing operation of the switchgear device 601. Similar as the energy storage lever 13, the drive lever 12 comprises one arc-shaped drive lever slot 501, which extends over 60° and is provided as arc-shaped elongated hole, as can bee seen from Figs. 6 and 8 in detail.

For actuating the spring 4, the energy storage lever 13 is pivotally connected to the spring 4 by an axially extending connecting pin 2, which is firmly connected to one end of the spring. The drive lever 12 is configured for being rotated by the connecting pin 2, which slides within the drive lever slot 501 such wise allowing the free-wheeling rotability between the drive lever 12 and the spring 4. The spring 4, once the springs' 4 dead-point position has been passed through, releases energy so as to rotate the drive lever 12 during at least one of the opening and closing operation of the switchgear device 601.

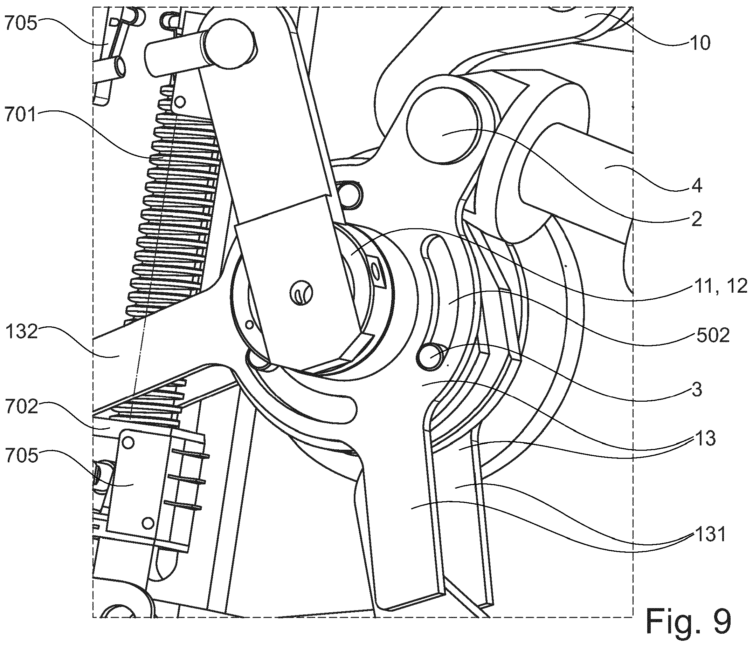

Fig. 9 shows a further implementation where the output shaft 11 and the drive lever 12 are provided one-piece. Such wise the pins 3 are attached to the output shaft 11, while sliding in the energy storage lever slots 502. All three implementations of Figs. 5, 7 and 9 each comprise two drive levers 12, provided one-piece in Fig. 9, and two energy storage levers 13, to which the one end of the spring 4 is connected via two opposite extending connecting pins 2.

While the invention has been illustrated and described in detail in the drawings and foregoing description, such illustration and description are to be considered illustrative or exemplary and not restrictive; the invention is not limited to the disclosed implementations. Other variations to be disclosed implementations can be understood and effected by those skilled in the art in practicing the claimed invention, from a study of the drawings, the disclosure, and the appended claims. Specifically, even though Figs. 5 to 9 are other preferred implementations and in this respect slightly different than the implementations described in Figs. 1 to 4, it is clear for the person skilled in the art that these are not separate implementations i.e. that these implementations can be combined. For example, the description about the "dead-point" or the screw rod 701 of Figs. 1 to 4 applies equally to the implementations of Figs. 7 to 9.

### Reference signs list

- 1: motor
- 2: connecting pin
- 3: pin
- 4: energy storage spring
- 5: first bearing/shaft sleeve
- 6: second transmission gear
- 8: base support
- 9: absorber
- 10: damping arm
- 11: output shaft, main hub
- 12: drive lever, actuating lever
- 13: energy storage lever, spring charging lever
- 14: shaft sleeve
- 101: first transmission gear
- 111: spline
- 121: third pushing arm
- 122: fourth pushing arm
- 131: first pushing arm
- 132: second pushing arm
- 301: first spring support
- 302: second spring support
- 303: connecting plate
- 304: guide rod
- 501: drive lever slot
- 502: energy storage lever slot
- 601: switchgear device
- 602: moving contact
- 701: screw rod
- 702: nut
- 703: protrusion
- 704: limiting rod
- 705: m icroswitch

## Claims

1. An operating mechanism for a switchgear device (601), comprising
a rotatable output shaft (11) configured for achieving an opening or closing operation of the switchgear device (601) by rotation,
a rotatable energy storage lever (13) and a spring (4), whereby the energy storage lever (13) is configured for being rotated by a motor (1) so as to drive the spring (4) to be compressed for storing energy, and
a rotatable drive lever (12) torque-proof connected to the output shaft (11), rotatably connected to the energy storage lever (13), **characterised in that** said rotatable drive lever is free-wheeling connected
to the spring (4) allowing a rotability between the drive lever (12) and the spring (4) of ≤ 120° for achieving the opening or closing operation of the switchgear device (601), whereby
the spring (4) is configured, during at least one of the opening and closing operation of the switchgear device (601), for releasing energy so as to rotate the drive lever (12) after passing through the spring's (4) dead-point position.

2. The operating mechanism according to the previous claim, whereby the drive lever (12) is torque-proof connected to the energy storage lever (13) or the drive lever (12) is free-wheeling connected to the energy storage lever (13) allowing a rotability between the drive lever (12) and the energy storage lever (13) of ≤ 120°.

3. The operating mechanism according to any of the previous claims, whereby the energy storage lever (13) is pivotally connected to the spring (4) by a connecting pin (2) and the drive lever (12) is configured for being rotated by the connecting pin (2).

4. The operating mechanism according to any of the previous claims, whereby the drive lever (12) comprises an arc-shaped drive lever slot (501) extending over ≤ 120° and whereby the drive lever slot (501) is preferably provided as arc-shaped elongated hole.

5. The operating mechanism according to the previous two claims, whereby the connecting pin (2) slides free-wheeling within the drive lever slot (501).

6. The operating mechanism according to any of the previous claims, whereby the output shaft (11) and the drive lever (12) are provided one-piece.

7. The operating mechanism according to any of the previous claims, whereby the energy storage lever (13) comprises a least one, preferably three, arc-shaped energy storage lever slot (502) extending over ≤ 120° and whereby the energy storage lever slot is preferably provided as arc-shaped elongated hole.

8. The operating mechanism according to the previous claim, whereby the drive lever (12) and/or the output shaft (11) comprises a pin (3) free-wheeling sliding within the energy storage lever slot (502).

9. The operating mechanism according to any of the previous claims, whereby the energy storage lever (13) comprises a Y-shape.

10. The operating mechanism according to any of the previous claims, comprising two drive levers (12) and/or two energy storage levers (13) arranged on both sides of the spring (4).

11. The operating mechanism according to any of the previous claims, comprising a motor (1), a screw rod (701) connected to the motor (1) and configured for being rotated by the motor (1) and a nut (702) sleeved on the screw rod (701) and configured to move linearly along the screw rod (701) when the screw rod (701) rotates, wherein the nut (702) is provided with a protrusion (703) configured to push the energy storage lever (13).

12. The operating mechanism according to any of the previous claims, comprising an absorber (9) and a damping arm (10) fixedly connected to one end of the output shaft (11) for contacting the absorber (9) during an end stage of the opening or closing operation of the switchgear device (601).

13. A switchgear device (601), comprising a moving contact (602) and the operating mechanism for a switchgear device (601) according to any of the previous claims and configured to drive the moving contact (602) to achieve the opening or closing operation.

14. The switchgear device (601) according to the previous claim, wherein the switchgear device (601) is provided as an earthing switch, a disconnector, an isolating and earthing switch, and a fast-acting earthing switch of a gas insulated switchgear.

## Patentansprüche

1. Betätigungsvorrichtung für eine Schaltanlage (601), umfassend
eine drehbare Ausgangswelle (11), die dazu konfiguriert ist, durch Drehung einen Öffnungs- oder Schließvorgang der Schaltanlage (601) zu bewirken,
einen drehbaren Energiespeicherhebel (13) und eine Feder (4), wobei der Energiespeicherhebel (13) dazu konfiguriert ist, von einem Motor (1) gedreht zu werden, um die Feder (4) anzutreiben, zum Speichern von Energie zusammengedrückt zu werden, und
einen drehbaren Antriebshebel (12), der drehmomentfest mit der Ausgangswelle (11) verbunden ist, drehbar mit dem Energiespeicherhebel (13) verbunden ist, **dadurch gekennzeichnet, dass** der drehbare Antriebshebel freilaufend mit der Feder (4) verbunden ist, was eine Drehbarkeit zwischen dem Antriebshebel (12) und der Feder (4) von ≤ 120° ermöglicht, um den Öffnungs- oder Schließvorgang der Schaltvorrichtung (601) zu bewirken, wobei
die Feder (4) dazu konfiguriert ist, während mindestens eines des Öffnungs- bzw. Schließvorgangs der Schaltanlage (601) Energie freizusetzen, sodass der Antriebshebel (12) nach dem Passieren der Totpunktposition der Feder (4) gedreht wird.

2. Betätigungsvorrichtung nach dem vorstehenden Anspruch, wobei der Antriebshebel (12) drehmomentfest mit dem Energiespeicherhebel (13) verbunden ist oder der Antriebshebel (12) freilaufend mit dem Energiespeicherhebel (13) verbunden ist, was eine Drehbarkeit zwischen dem Antriebshebel (12) und dem Energiespeicherhebel (13) von ≤ 120° ermöglicht.

3. Betätigungsvorrichtung nach einem der vorstehenden Ansprüche, wobei der Energiespeicherhebel (13) über einen Verbindungsstift (2) schwenkbar mit der Feder (4) verbunden ist und der Antriebshebel (12) dazu konfiguriert ist, durch den Verbindungsstift (2) gedreht zu werden.

4. Betätigungsvorrichtung nach einem der vorstehenden Ansprüche, wobei der Antriebshebel (12) einen bogenförmigen Antriebshebelschlitz (501) umfasst, der sich über ≤ 120° erstreckt, und wobei der Antriebshebelschlitz (501) vorzugsweise als bogenförmiges Langloch vorgesehen ist.

5. Betätigungsvorrichtung nach den beiden vorstehenden Ansprüchen, wobei der Verbindungsstift (2) freilaufend innerhalb des Antriebshebelschlitzes (501) gleitet.

6. Betätigungsvorrichtung nach einem der vorstehenden Ansprüche, wobei die Ausgangswelle (11) und der Antriebshebel (12) einstückig vorgesehen sind.

7. Betätigungsvorrichtung nach einem der vorstehenden Ansprüche, wobei der Energiespeicherhebel (13) mindestens einen, vorzugsweise drei bogenförmige Energiespeicherhebelschlitze (502) umfasst, die sich über ≤ 120° erstrecken, und wobei der Energiespeicherhebelschlitz vorzugsweise als bogenförmiges Langloch vorgesehen ist.

8. Betätigungsvorrichtung nach Anspruch 1, wobei der Antriebshebel (12) und/oder die Ausgangswelle (11) einen Stift (3) umfasst, der freilaufend innerhalb des Energiespeicherhebelschlitzes (502) gleitet.

9. Betätigungsvorrichtung nach einem der vorstehenden Ansprüche, wobei der Energiespeicherhebel (13) eine Y-Form umfasst.

10. Betätigungsvorrichtung nach einem der vorstehenden Ansprüche, umfassend zwei Antriebshebel (12) und/oder zwei Energiespeicherhebel (13), die beidseitig der Feder (4) angeordnet sind.

11. Betätigungsvorrichtung nach einem der vorstehenden Ansprüche, umfassend einen Motor (1), eine Schraubstange (701), die mit dem Motor (1) verbunden und dazu konfiguriert ist, durch den Motor (1) gedreht zu werden, sowie eine Mutter (702), die auf die Schraubstange (701) aufgeschoben ist und dazu konfiguriert ist, sich linear entlang der Schraubstange (701) zu bewegen, wenn sich die Schraubstange (701) dreht, wobei die Mutter (702) mit einem Vorsprung (703) versehen ist, der dazu konfiguriert ist, den Energiespeicherhebel (13) zu drücken.

12. Betätigungsvorrichtung nach einem der vorstehenden Ansprüche, umfassend einen Absorber (9) und einen Dämpfungsarm (10), der fest mit einem Ende der Ausgangswelle (11) verbunden ist, um während einer Endphase des Öffnungs- oder Schließvorgangs der Schaltanlage (601) mit dem Absorber (9) in Kontakt zu kommen.

13. Schaltanlage (601), umfassend einen beweglichen Kontakt (602) und die Betätigungsvorrichtung für eine Schaltanlage (601) nach einem der vorstehenden Ansprüche, und dazu konfiguriert, den beweglichen Kontakt (602) anzutreiben, um den Öffnungs- oder Schließvorgang zu bewirken.

14. Schaltanlage (601) nach dem vorstehenden Anspruch, wobei die Schaltanlage (601) als ein Erdungsschalter, ein Trennschalter, ein Isolier- und Erdungsschalter sowie ein schnellwirkender Erdungsschalter einer gasisolierten Schaltanlage vorgesehen ist.

## Revendications

1. Mécanisme de fonctionnement pour un dispositif de commutation (601), comprenant
un arbre de sortie rotatif (11) conçu pour obtenir une opération d'ouverture ou de fermeture du dispositif de commutation (601) par rotation,
un levier de stockage d'énergie rotatif (13) et un ressort (4), moyennant quoi le levier de stockage d'énergie (13) est conçu pour être mis en rotation par un moteur (1) de manière à entraîner le ressort (4) à être comprimé pour stocker de l'énergie, et
un levier d'entraînement rotatif (12) accouplé de manière résistante au couple à l'arbre de sortie (11), accouplé en rotation au levier de stockage d'énergie (13), **caractérisé en ce que** ledit levier d'entraînement rotatif est accouplé en roue libre au ressort (4) pour permettre une capacité de rotation entre le levier d'entraînement (12) et le ressort (4) de ≤ 120° pour obtenir l'opération d'ouverture ou de fermeture du dispositif de commutation (601), moyennant quoi
le ressort (4) est conçu, pendant au moins l'une des opérations d'ouverture et de fermeture du dispositif de commutation (601), pour libérer de l'énergie de manière à faire tourner le levier d'entraînement (12) après passage par la position de point mort du ressort (4).

2. Mécanisme de fonctionnement selon la revendication précédente, moyennant quoi le levier d'entraînement (12) est accouplé de manière résistante au couple au levier de stockage d'énergie (13) ou le levier d'entraînement (12) est accouplé en roue libre au levier de stockage d'énergie (13) pour permettre une capacité de rotation entre le levier d'entraînement (12) et le levier de stockage d'énergie (13) de ≤ 120°.

3. Mécanisme de fonctionnement selon l'une quelconque des revendications précédentes, moyennant quoi le levier de stockage d'énergie (13) est accouplé de manière pivotante au ressort (4) par une broche d'accouplement (2) et le levier d'entraînement (12) est conçu pour être mis en rotation par la broche d'accouplement (2).

4. Mécanisme de fonctionnement selon l'une quelconque des revendications précédentes, moyennant quoi le levier d'entraînement (12) comprend une fente de levier d'entraînement en forme d'arc (501) s'étendant sur ≤ 120° et moyennant quoi la fente de levier d'entraînement (501) est de préférence pourvue en tant qu'orifice allongé en forme d'arc.

5. Mécanisme de fonctionnement selon les deux revendications précédentes, moyennant quoi la broche d'accouplement (2) coulisse en roue libre au sein de la fente de levier d'entraînement (501).

6. Mécanisme de fonctionnement selon l'une quelconque des revendications précédentes, moyennant quoi l'arbre de sortie (11) et le levier d'entraînement (12) sont pourvus d'une seule pièce.

7. Mécanisme de fonctionnement selon l'une quelconque des revendications précédentes, moyennant quoi le levier de stockage d'énergie (13) comprend au moins une, de préférence trois, fentes de levier de stockage d'énergie en forme d'arc (502) s'étendant sur ≤ 120° et moyennant quoi la fente de levier de stockage d'énergie est de préférence pourvue en tant qu'orifice allongé en forme d'arc.

8. Mécanisme de fonctionnement selon la revendication précédente, moyennant quoi le levier d'entraînement (12) et/ou l'arbre de sortie (11) comprend une broche (3) coulissant en roue libre au sein de la fente de levier de stockage d'énergie (502).

9. Mécanisme de fonctionnement selon l'une quelconque des revendications précédentes, moyennant quoi le levier de stockage d'énergie (13) comprend une forme en Y.

10. Mécanisme de fonctionnement selon l'une quelconque des revendications précédentes, comprenant deux leviers d'entraînement (12) et/ou deux leviers de stockage d'énergie (13) agencés sur les deux côtés du ressort (4).

11. Mécanisme de fonctionnement selon l'une quelconque des revendications précédentes, comprenant un moteur (1), une tige filetée (701) accouplée au moteur (1) et conçue pour être mise en rotation par le moteur (1) et un écrou (702) enfilé sur la tige filetée (701) et conçu pour se déplacer de manière linéaire le long de la tige filetée (701) lorsque la tige filetée (701) tourne, dans lequel l'écrou (702) est pourvu d'une saillie (703) conçue pour pousser le levier de stockage d'énergie (13).

12. Mécanisme de fonctionnement selon l'une quelconque des revendications précédentes, comprenant un absorbeur (9) et un bras amortisseur (10) accouplés de manière fixe à une extrémité de l'arbre de sortie (11) pour mettre en contact l'absorbeur (9) pendant un stade final de l'opération d'ouverture ou de fermeture du dispositif de commutation (601).

13. Dispositif de commutation (601), comprenant un contact mobile (602) et le mécanisme de fonctionnement pour un dispositif de commutation (601) selon l'une quelconque des revendications précédentes et conçu pour entraîner le contact mobile (602) afin d'obtenir l'opération d'ouverture ou de fermeture.

14. Dispositif de commutation (601) selon la revendication précédente, dans lequel le dispositif de commutation (601) est pourvu en tant que commutateur de mise à la terre, sectionneur, commutateur d'isolation et de mise à la terre et commutateur de mise à la terre à action rapide d'un appareil de commutation isolé des gaz.
